# EUROPÄISCHE PATENTSCHRIFT

(11) **EP 3 330 122 B1**
(45) Veröffentlichungstag und Bekanntmachung des Hinweises auf die Patenterteilung: **12.02.2020**
(21) Anmeldenummer: 17203687.3
(22) Anmeldetag: 27.11.2017
(51) Int. Cl.: B60N 2/14, B60N 2/06

(54) **VORRICHTUNG FÜR EIN FAHRZEUGSITZ MIT EINER DREHEINHEIT UND EINER VERSCHIEBEEINHEIT**
DEVICE FOR A VEHICLE SEAT HAVING A ROTARY UNIT AND A DISPLACEMENT UNIT
DISPOSITIF POUR UN SIÈGE DE VÉHICULE DOTÉ D'UNE UNITÉ DE ROTATION ET D'UNE UNITÉ DE DÉPLACEMENT

(30) Priorität: 01.12.2016 DE 102016123240
(43) Veröffentlichungstag der Anmeldung: 06.06.2018
(73) Patentinhaber: AGUTI PRODUKTENTWICKLUNG & DESIGN GMBH, 88085 Langenargen (DE)
(72) Erfinder: Rogg, Christian, 88142 Wasserburg (DE)
(74) Vertreter: Otten, Roth, Dobler & Partner mbB Patentanwälte

(56) Entgegenhaltungen:
- WO-A1-2012/003096
- DE-B3- 10 320 356

## Beschreibung

### Stand der Technik

Vorrichtungen zur Bewegung eines Fahrzeugsitzes sind bereits bekannt.

Eine bekannte Vorrichtung zur Bewegung des Fahrzeugsitzes ist als eine Dreheinheit ausgebildet, mittels welcher der Fahrzeugsitz um eine Drehachse senkrecht zu einer Sitzfläche des Fahrzeugsitzes drehbar vorhanden ist. Eine weitere bekannte Vorrichtung zur Bewegung des Fahrzeugsitzes ist als eine Verschiebeeinrichtung ausgebildet, mittels welcher der Fahrzeugsitz entlang einer Schieberichtung verschiebbar ist. Auch bekannt sind Kombinationen der beiden vorangegangen genannten Bewegungsvorrichtungsvarianten z.B. aus der DE 103 20 356 B3, hierdurch ist der Fahrzeugsitz sowohl um eine Drehachse drehbar, als auch in eine Schieberichtung verschiebbar, wobei die Schieberichtung vorteilhafterweise senkrecht zur Drehachse ausgebildet ist.

Nachteilig an einer solchen Vorrichtungskombination ist, dass ein Fahrzeugsitz, an welchem diese Vorrichtungskombination angeordnet ist, einen vergleichsweise großen Raumbereich bzw. Bewegungsbereich im Fahrzeug, in welchem der Fahrzeugsitz anordenbar ist, beansprucht.

### Aufgaben und Vorteile der Erfindung

Der Erfindung liegt die Aufgabe zugrunde eine verbesserte Vorrichtung zur Bewegung eines Fahrzeugsitzes eines Fahrzeugs bereitzustellen.

Die Aufgabe wird durch die Merkmale des unabhängigen Anspruchs 1 gelöst.

In den abhängigen Ansprüchen sind vorteilhafte und zweckmäßige Ausführungsformen der Erfindung angegeben.

Die Erfindung geht von einer Vorrichtung für ein Fahrzeugsitz mit einer Dreheinheit und einer Verschiebeeinheit aus, wobei verschiedene Drehpositionen der Dreheinheit einstellbar sind, wobei verschiedene Verschiebepositionen der Verschiebeeinheit einstellbar sind. Die Vorrichtung ist beispielsweise als eine Fahrzeugsitzvorrichtung vorhanden.

Ein Fahrzeug, in welchem der Fahrzeugsitz vorteilhafterweise anordenbar ist, ist beispielsweise als ein Automobil, z.B. als ein Transporter, als ein Wohnmobil, als ein Reisemobil und/oder als ein Caravan ausgebildet. Vorstellbar ist allerdings auch, dass das Fahrzeug als ein Wohnwagen bzw. als ein Wohnanhänger ausgestaltet ist.

Der Fahrzeugsitz kann als ein Fahrer- oder Beifahrersitz vorhanden sein und ist insbesondere in einem vorderen Bereich des Fahrzeugs anordenbar. Denkbar ist auch, dass der Fahrzeugsitz in einem hinteren Bereich des Fahrzeugs anordenbar ist. Der Fahrzeugsitz ist beispielsweise als ein Einzelsitz ausgestaltet.

Der wesentliche Aspekt der Erfindung ist darin zu sehen, dass die Vorrichtung einen Sperrmechanismus aufweist, sodass eine Einstellbarkeit eines Drehbereichs der Dreheinheit abhängig von einer Verschiebeposition der Verschiebeeinheit ist.

In einer vorteilhaften Variante der Vorrichtung wird durch den Sperrmechanismus eine Einstellbarkeit eines Verschiebebereichs der Verschiebeeinheit abhängig von einer Drehposition der Dreheinheit ermöglicht.

Durch beide vorgenannten Varianten der Erfindung ist ein Raumbereich einstellbar, welchen der Fahrzeugsitz, welcher die Vorrichtung umfasst, einnehmen kann. Insbesondere ist hierdurch ein Dreh- und/oder Schiebebereich bzw. ein Bewegungsbereich der Vorrichtung, insbesondere des Fahrzeugsitzes, an welchem die Vorrichtung vorhanden ist, vorgebbar.

Auch ist es von Vorteil, dass ein Freiheitgrad einer Bewegung der Dreheinheit und/oder der Verschiebeeinheit durch den Sperrmechanismus begrenzt oder beschränkt ist.

Vorteilhafterweise ist ein Drehbereich abhängig von einer Verschiebeposition der Verschiebeeinheit definiert, z.B. ist durch den Sperrmechanismus abhängig von einer Verschiebeposition der Verschiebeeinheit eine Drehung der Dreheinheit verhindert. Der Drehbereich, welcher vorgebbar ist, ist bevorzugterweise kleiner als eine ganze Umdrehung, beispielsweise kleiner als 360°. Vorteilhafterweise sind mehrere Drehbereiche an der Dreheinheit vorhanden, welche durch eine Verschiebeposition der Verschiebeeinheit vorgebbar sind. Beispielsweise ist ein Drehbereich zwischen 0° und 360°, z.B. zwischen 0° und 180° oder zwischen 0° und 90° vorgebbar. Denkbar ist, dass ein Drehbereich von 5°, 10°, 15°, 20°, 25°, 30°, 35°, 40°, 45°, 50°, 55°, 60°, 75° oder 90° definierbar ist.

Die Verschiebeeinheit ist insbesondere linear verschieblich vorhanden. Bevorzugterweise ist ein Verschiebebereich abhängig von einer Drehposition der Dreheinheit definiert, z.B. ist durch den Sperrmechanismus abhängig von einer Drehposition der Dreheinheit eine Verschiebung der Verschiebeeinheit verhindert. Beispielsweise sind mehrere Verschiebebereiche an der Verschiebeeinheit vorhanden, welche durch eine Drehposition der Dreheinheit vorgebbar sind. Beispielsweise ist ein Verschiebebereich vorgebbar, welcher kleiner ist als eine Hälfte einer maximalen Verschiebelänge der Verschiebeeinheit. Denkbar ist, dass der Verschiebebereich derart definierbar ist, dass er z.B. kleiner oder gleich einem Viertel der maximalen Verschiebelänge der Verschiebeinheit ist.

Weiter wird erfindungsgemäss vorgeschlagen, dass der Sperrmechanismus ein Verriegelungselement aufweist, wobei das Verriegelungselement senkrecht zu einer Drehachse der Dreheinheit verschiebbar und/oder schwenkbar ist.

Vorteilhafterweise weist das Verriegelungselement eine Längsachse auf. Das Verriegelungselement ist z.B. mit der Längsachse parallel zur Drehachse der Dreheinheit ausgerichtet. Das Verriegelungselement ist beispielsweise stiftartig, z.B. als ein Bolzen und/oder eine Schraube ausgebildet. Bevorzugterweise ist das Verriegelungselement an der Dreheinheit angeordnet, z.B. verschiebbar und/oder drehbar an der Dreheinheit befestigt.

Auch ist es von Vorteil, dass Rastmittel an der Dreheinheit vorhanden sind, wobei die Rastmittel in einer Weise vorhanden sind, dass das Verriegelungselement in die Rastmittel eingreifen kann, wobei bei einem Eingriff des Verriegelungselements in die Rastmittel ein Drehbereich der Dreheinheit begrenzt ist. Vorteilhafterweise umfasst der Sperrmechanismus die Rastmittel. Durch eine vorteilhafte Ausgestaltung der Rastmittel ist bei einem Eingriff des Verriegelungselements in die Rastmittel beispielsweise ein Drehbereich vorgegeben.

Eine vorteilhafte Modifikation der Erfindung ist, dass Haltemittel an der Verschiebeeinheit vorhanden sind, wobei die Haltemittel in einer Weise vorhanden sind, dass das Verriegelungselement in die Haltemittel eingreifen kann, wobei bei einem Eingriff des Verriegelungselements in die Haltemittel ein Verschiebebereich der Verschiebeeinheit begrenzt ist. Beispielsweise umfasst der Sperrmechanismus die Haltemittel. Durch eine vorteilhafte Ausgestaltung der Haltemittel ist bei einem Eingriff des Verriegelungselements in die Haltemittel beispielsweise ein Verschiebebereich vorgegeben.

Auch wird vorgeschlagen, dass das Verriegelungselement derart vorhanden ist, dass das Verriegelungselement entweder mit den Rastmittel und/oder mit den Haltemittel in Eingriff steht. Denkbar ist, dass das Verriegelungselement entweder in die Rastmittel oder die Haltemittel eingreift. Vorstellbar ist aber auch, dass das Verriegelungselement sowohl in die Haltemittel, als auch in die Rastmittel eingreift, insbesondere zeitgleich. Denkbar ist, dass die Haltemittel und die Rastmittel derart ausgestaltet sind, sodass das Verriegelungselement zeitgleich in beide eingreifen kann, in diesem Fall ist die Vorrichtung in diesem Zustand insbesondere zeitgleich sowohl verschiebbar, als auch drehbar vorhanden.

Ebenfalls von Vorteil ist, dass der Sperrmechanismus ein Bedienelement aufweist, welches mit dem Verriegelungselement derart verbunden ist, dass durch eine Bewegung des Bedienelements eine Position des Verriegelungselements veränderbar ist.

Das Bedienelement ist beispielsweise als ein Hebel ausgebildet. Hierdurch ist es einem Nutzer möglich mittels des Bedienhebels die Position des Verriegelungselements zu verändern. Vorteilhafterweise sind das Bedienelement und das Verriegelungselement einstückig vorhanden. Denkbar ist, dass das Bedienelement L-förmig oder T-förmig vorhanden ist, wobei z.B. eine kurze Seite des L's als Verriegelungselement ausgestaltet ist und/oder die kurze Seite des L's z.B. das Verriegelungselement umfasst.

Weiter wird vorgeschlagen, dass im angeordneten Zustand der Vorrichtung am Fahrzeug die Rastmittel relativ zum Fahrzeug positionsfest an der Dreheinheit vorhanden sind. Vorteilhafterweise sind die Rastmittel an der Dreheinheit positionsfest ausgebildet.

Die Dreheinheit ist beispielsweise zweiteilig ausgebildet, wobei die beiden Teile der Dreheinheit zueinander drehbar vorhanden sind. Ein erstes Teil der Dreheinheit ist vorteilhafterweise als eine Grundplatte ausgebildet, welche dazu vorgesehen ist, im angeordneten Zustand insbesondere positionsfest mit dem Fahrzeug verbunden zu werden. Bevorzugterweise sind die Rastmittel an der Grundplatte ausgebildet. Ein zweites Teil ist z.B. als ein Drehteller ausgebildet. Der Drehteller ist bspw. dazu ausgestaltet die Verschiebeeinheit anzuordnen. Hierdurch ist die Verschiebeeinheit vorteilhafterweise relativ zu den Rastmittel verschieblich an der Dreheinheit angeordnet. Am Drehteller ist beispielsweise das Bedienelement und/oder das Verriegelungselement angebracht.

Als vorteilhaft erweist sich auch, dass die Haltemittel relativ zur Dreheinheit verschiebbar an der Verschiebeeinheit vorhanden sind.

Die Verschiebeeinheit ist bevorzugterweise ebenfalls zweiteilig vorhanden. Ein erstes Verschiebeteil ist beispielsweise insbesondere positionsfest mit dem Drehteller verbunden. Ein zweites Verschiebeteil ist vorteilhafterweise insbesondere linear verschieblich zum ersten Verschiebeteil an der Verschiebeeinheit vorhanden.

Vorteilhafterweise sind die Haltemittel derart an der Verschiebeeinheit ausgebildet, dass die Haltemittel verschieblich zur Dreheinheit, insbesondere verschieblich zu den Rastmittel und/oder z.B. verschieblich zum Verriegelungselement vorhanden sind. Bevorzugterweise sind die Haltemittel am zweiten Verschiebeteil ausgebildet. Denkbar ist auch, dass der Bedienhebel und/oder das Verriegelungselement am ersten Verschiebeteil angeordnet sind.

Vorstellbar ist auch, dass der Drehteller und das erste Verschiebeteil einstückig vorhanden sind.

Ebenfalls von Vorteil ist, dass die Vorrichtung ein Führungsorgan umfasst, welches dazu ausgestaltet ist, das Verriegelungselement zu führen. Beispielsweise ist das Führungsorgan derart vorhanden, dass eine Bewegung bzw. ein Bewegungsbereich des Verriegelungselements begrenzt ist. Auch ist es vorstellbar, dass das Führungsorgan in einer Weise ausgebildet ist, dass das Führungsorgan eine Bewegungsebene des Verriegelungselements vorgibt. Das Führungsorgan ist vorteilhafterweise am Drehteller und/oder am ersten Verschiebeteil ausgebildet.

### Beschreibung eines Ausführungsbeispiels

Ein Ausführungsbeispiel wird anhand der nachstehenden schematischen Zeichnungen unter Angabe von weiteren Einzelheiten und Vorteilen näher erläutert.

Es zeigen:
- Figur 1: eine perspektivische Ansicht von schräg vorne oben auf eine erfindungsgemäße Vorrichtung,
- Figur 2: eine Draufsicht auf die Vorrichtung nach Figur 1,
- Figur 3: eine perspektivische Ansicht von schräg vorne oben auf die Vorrichtung nach Figur 1 mit einer Verschiebeeinheit in einer veränderten Position,
- Figur 4: eine vergrößerte Darstellung in einer weiteren Perspektive auf ein Verriegelungselement der Vorrichtung in einer Position der Vorrichtung nach Figur 3,
- Figuren 5 bis 8: eine perspektivische Ansicht von schräg vorne oben auf die Vorrichtung nach Figur 1 mit der Verschiebeeinheit und einer Dreheinheit in unterschiedlichen, veränderten Position und
- Figur 9: eine vergrößerte Darstellung in einer weiteren Perspektive auf das Verriegelungselement der Vorrichtung in einer Position nach den Figuren 7 oder 8 mit der Verschiebeeinheit in einer weiteren Position.

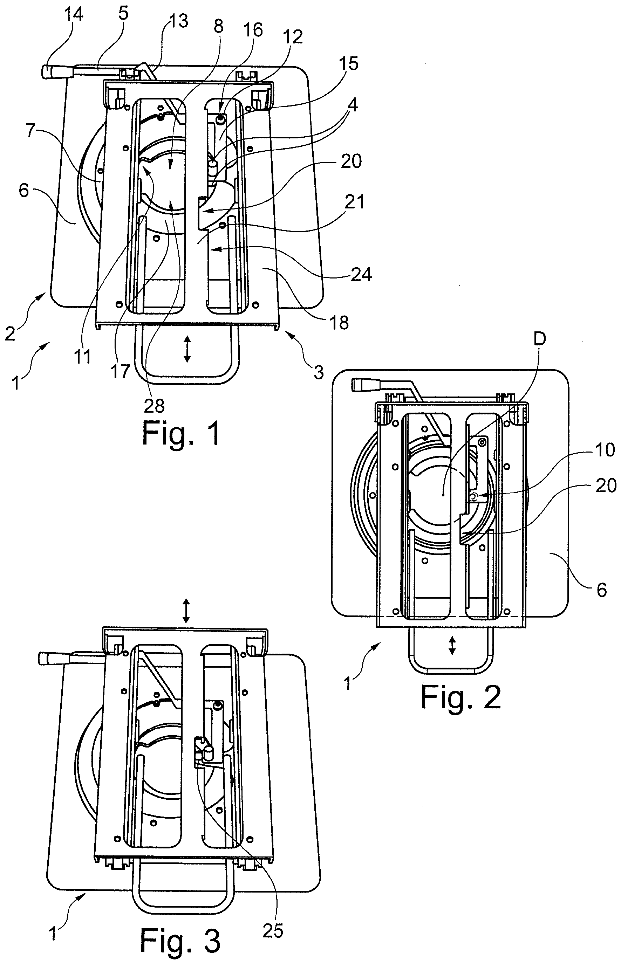

Eine erfindungsgemäße Vorrichtung 1 umfasst eine Dreheinheit 2, eine Verschiebeeinheit 3, ein Verriegelungselement 4, sowie z.B. einen Bedienhebel 5 (Figuren 1 bis 9).

Die Dreheinheit 2 setzt sich vorteilhafterweise aus einer Grundplatte 6 und einem Drehteller 7 zusammen. Die Grundplatte 6 ist beispielsweise dazu ausgestaltet positionsfest an einem Fahrzeug (nicht dargestellt), z.B. an einem Unterbau eines Fahrzeugsitzes, montiert zu werden. Der Drehteller 7 ist z.B. um eine Drehachse D drehbar auf der Grundplatte 6 gelagert. Die Grundplatte 6 umfasst in einem Bereich um die Drehachse D eine z.B. kreisrunde, insbesondere zylinderartige Öffnung 8. Der Drehteller 7 besitzt in einem Bereich um die Drehachse D eine z.B. kreisrunde, insbesondere zylinderartige Öffnung 28. Vorteilhafterweise ist ein Durchmesser der Öffnung 28 gleich groß oder größer als ein Durchmesser der Öffnung 8. Die Grundplatte 8 berandet mit einem z.B. kreisförmigen, insbesondere zylinderförmigen Umfangsrand 9 vorteilhafterweise die Öffnung 8. Im Bereich des Umfangsrand 9 sind an der Grundplatte 8 Rastmittel in Form von Aussparungen 10, 11 ausgebildet. Die Aussparungen 10, 11 sind vorteilhafterweise derart vorhanden, dass sie die kreis- und/oder zylinderförmige Kontur des Umfangsrands 9 z.B. unterbrechen bzw. in einem Durchmesser vergrößern.

Beispielsweise ist am Drehteller 7 der Bedienhebel 5 an einer Aufnahme 12 des Drehtellers 7 drehbar bzw. schwenkbar gelagert montiert. Der Bedienhebel 5 ist vorteilhafterweise abgewinkelt ausgebildet, mit einem z.B. vergleichsweise langen Hebelarm 13, an welcher ein Griff 14 zur Bedienung des Bedienhebels 5 durch einen Nutzer vorhanden ist und einem dazu abgewinkelt vorhandenen z.B. vergleichsweise kurzen Hebelarm 15. Am Hebelarm 15 ist vorteilhafterweise das Verriegelungselement 4 ausgebildet. Die beiden Hebelarme 13, 15 sind bevorzugterweise an einer Verbindungsstelle 16 miteinander verbunden. Beispielsweise ist der Bedienhebel 5 an der Verbindungsstelle 16 an der Aufnahme 12 insbesondere drehbar montiert.

Die Verschiebeeinheit 3 besitzt beispielsweise ein erstes Verschiebeteil 17 und ein zweites Verschiebeteil 18. Vorteilhafterweise sind das erste und das zweite Verschiebeteil 17, 18 zueinander insbesondere linear verschieblich an der Verschiebeeinheit 3 vorhanden. Bevorzugterweise ist das erste Verschiebeteil 17 fest mit dem Drehteller 7 der Dreheinheit 2 verbunden, z.B. verschraubt, verschweißt und/oder vernietet. Hierdurch ist die Verschiebeeinheit 3 relativ zur Grundplatte 6 drehbar vorhanden. Insbesondere im montierten Zustand der Vorrichtung 1 am Fahrzeug ist die Verschiebeeinheit 3 dadurch drehbar am Fahrzeug montiert.

Das erste Verschiebeteil 17 umfasst vorteilhafterweise eine z.B. kreisrunde, insbesondere zylinderartige Öffnung 19. Die Öffnung 19 ist, insbesondere in einem Durchmesser genauso groß, vorteilhafterweise größer ausgebildet, als die Öffnung 8 der Dreheinheit 2. Denkbar ist auch, dass das erste Verschiebeteil 17 rahmenartig vorhanden ist, wobei Abstände von sich gegenüberliegenden Rahmenseiten des Rahmens vorteilhafterweise größer ausgebildet sind, als der Durchmesser der Öffnungen 8, 28 der Dreheinheit 2 und die Verschiebeeinheit 3 derart auf der Dreheinheit 2 angeordnet ist, sodass der Rahmen des ersten Verschiebeteils 17 aus einer Draufsicht auf die Vorrichtung 1 gesehen nicht über den Öffnungen 8, 19 vorhanden ist bzw. die Rahmenseiten in radialer Richtung nach außen beabstandet zum Umfangsrand 9 vorhanden sind. Weiter vorstellbar ist, dass das erste Verschiebeteil 17 zwei Schienenelemente 22, 23 aufweist, an welchen das zweite Verschiebeteil 18 insbesondere linear verschieblich angeordnet ist. Vorteilhafterweise sind die beiden Schienenelemente 22, 23 parallel zueinander ausgerichtet vorhanden. Die beiden Schienenelemente 22, 23 sind vorteilhafterweise derart beabstandet zueinander ausgebildet, dass ein Abstand der Schienenelemente 22, 23 größer ist, als ein größter Durchmesser einer Öffnung 8, 19.

Das zweite Verschiebeteil 18 umfasst vorteilhafterweise eine Montageeinrichtung, an welcher ein Fahrzeugsitz (nicht dargestellt) befestigt werden kann. Im angeordneten Zustand sind der Fahrzeugsitz und das zweite Verschiebeteil 18 vorteilhafterweise positionsfest miteinander verbunden. Hierdurch ist beispielsweise ein Fahrzeugsitz sowohl drehbar, als auch verschiebbar mit der Grundplatte 6 bzw. mit einem Fahrzeug verbunden.

Das zweite Verschiebeteil 18 ist vorteilhafterweise ebenfalls rahmenartig ausgebildet. Idealerweise entspricht ein Rahmen des zweiten Verschiebeteils 18 in seinen Dimensionen, Dimensionen des Rahmens des ersten Verschiebeteils 17. Beispielsweise umfasst das zweite Verschiebeteil 18 zusätzlich eine Längsstrebe 21. Die Längsstrebe 21 ist beispielsweise in einer Weise ausgebildet und die Verschiebeeinheit 3 ist vorteilhafterweise derart an der Dreheinheit 2 angebracht, dass die Längsstrebe 21, insbesondere in jeder Position der Vorrichtung 1 eine Sekante zu den beiden Öffnungen 8, 19 bildet. Beispielsweise ist die Längsstrebe 21 parallel zu den Schienenelementen 22, 23 des ersten Verschiebeteils 17 an der Verschiebeeinheit 3 vorhanden und z.B. zwischen Rahmenseiten des Rahmens des zweiten Verschiebeteils 18 ausgebildet. Am zweiten Verschiebeteil 18 ist beispielsweise ein Haltemittel in Form einer Aussparung 20 im Bereich des Randes 24 an der Längsstrebe 21 vorhanden.

Vorteilhafterweise bildet in jeder Verschiebe- bzw. Drehposition der Vorrichtung 1 ein Rand 24 der Längsstrebe 21 in einer Draufsicht auf die Vorrichtung 1 gesehen eine Tangente der Öffnung 8 bzw. eine Tangente eines Kreisbogens der Öffnung 8, insbesondere eine Tangente des Umfangsrands 9 der Öffnung 8. Bevorzugterweise ist in einer Draufsicht betrachtet ein Punkt des Rands 24 der Längsstrebe 21 bzw. ein Punkt einer Längsachse der Längsstrebe 21, welcher auf einer Normalen des Rands 24 oder der Längsachse der Längsstrebe 21 liegt, wobei die Normale durch die Drehachse D verläuft, in jeder Dreh- oder Verschiebeposition der Vorrichtung 1 zum Umfangsrand 9 der Grundplatte 6 bzw. dem Kreisbogen der Öffnung 8 der Grundplatte 6 gleich weit beabstandet vorhanden, dieser Abstand wird im Folgenden als radialer Abstand bezeichnet. Vorteilhafterweise ist dieser radiale Abstand vom Rand 24 zum Umfangsrand 9 der Grundplatte 6 Null, d.h. aus der Draufsicht auf die Vorrichtung 1 gesehen tangiert der Rand 24 bzw. die Längstrebe 21 bspw. den Umfangsrand 9 bzw. den Kreisbogen der Öffnung 8.

Vorteilhafterweise ist sind sowohl die Rastmittel, als auch die Haltemittel derart vorhanden, dass das Verriegelungselement 4 in die Rastmittel oder die Haltemittel eingreifend positionierbar ist, sodass das Verriegelungselement 4 in einer Draufsicht auf die Vorrichtung 1 gesehen nicht durch den Kreisbogen der Öffnung 8 oder die Längsachse des Rands 24 der Längsstrebe 21 geschnitten wird.

Das Verriegelungselement 4 ist insbesondere als ein bspw. zylinderförmiger Bolzen ausgebildet. Wobei der Bolzen vorteilhafterweise derart am Bedienhebel 5 angeordnet ist, dass eine Längsachse des Bolzens senkrecht zu einer Bewegungsebene des Bedienhebels 5 vorhanden ist. Der Bolzen greift beispielsweise in jeder Position an der Vorrichtung 1 entweder in ein Rastmittel, z.B. in die Aussparung 10 oder in die Aussparung 11, und/oder in ein Haltemittel, z.B. in die Aussparung 20, ein.

Vorteilhafterweise ist der Bolzen derart vorhanden, dass er mit einem ersten Außenbereich im angeordneten Zustand am Rastmittel bzw. an einer Fläche des Rastmittels anstehbar anordenbar ist und mit einem zweiten Außenbereich, welcher dem ersten Außenbereich in radialer Richtung zur Drehachse D gesehen gegenüberliegend vorhanden ist am Haltemittel bzw. an einer Fläche des Haltemittels anstehbar anordenbar ist. Greift der Bolzen in einer Position in ein Haltemittel ein, so ist ein Drehbereich des Drehtellers 7 relativ zur Grundplatte 6 beschränkt. Umgekehrt, greift der Bolzen in einer Position in ein Rastmittel ein, so ist ein Verschiebebereich des zweiten Verschiebeteils 18 relativ zum ersten Verschiebeteil 17 bzw. zur Grundplatte 6 beschränkt. Ist die Vorrichtung z.B. derart vorhanden, dass der Bolzen in einer Position gleichzeitig sowohl in ein Rastmittel, als auch in ein Haltemittel eingreift, so ist sowohl ein Drehbereich, als auch ein Verschiebebereich beschränkt.

Im Folgenden wird beispielhaft durch die Figuren 1 bis 9 verschiedene Bewegungspositionen der Vorrichtung 1 beschrieben:
In den Figuren 1 und 2 ist der Bolzen in die Aussparung 10 eingreifend angeordnet. Hierdurch ist eine Drehbewegung des Drehtellers 7 und damit der Verschiebeeinheit 3 relativ zur Grundplatte 6 gesperrt. In dieser Position umschließt die Aussparung 10 den Bolzen vorteilhafterweise formschlüssig derart, dass der Bolzen in einer Drehrichtung um die Drehachse D durch die Aussparung 10 gehindert ist (Figur 2). In Figur 2 ist in einer Draufsicht auf die Vorrichtung 1 zum besseren Verständnis die Verschiebeeinheit 2 relativ zur Grundplatte 6 transparent dargestellt. Hierdurch ist zu erkennen, dass der Drehteller 7 durch den Bolzen in der Aussparung 10 relativ zur Grundplatte 6 festgelegt ist und dass das zweite Verschiebeteil 18 der Verschiebeeinheit 3 verschieblich am Bolzen vorbei bewegbar ist.

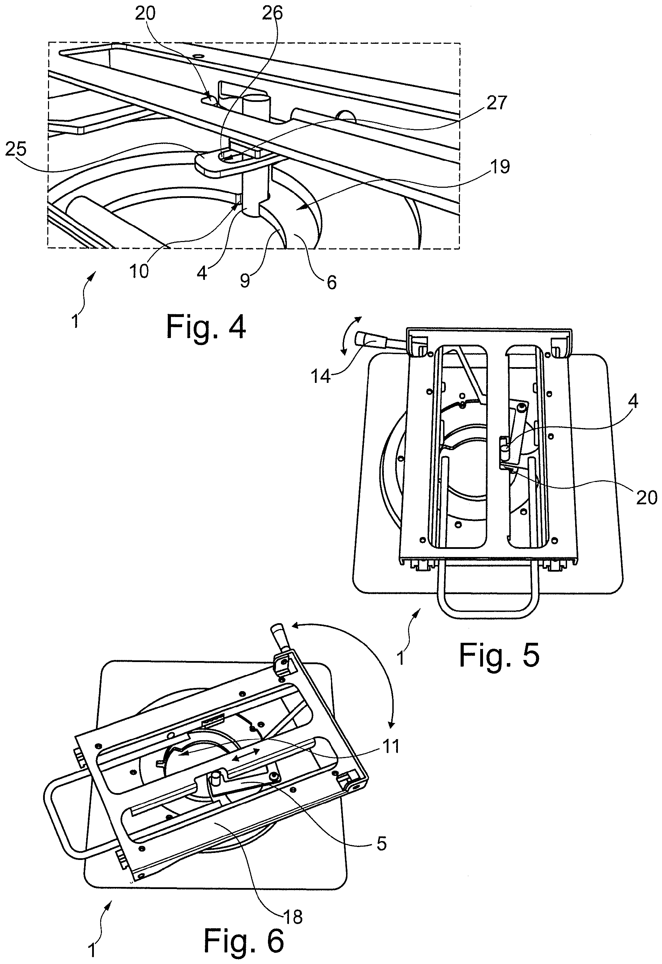

In den Figuren 3 und 5 ist das zweite Verschiebeteil 18 derart relativ zur Grundplatte 6 verschoben, dass der Bolzen durch eine Bewegung des Bedienhebels 5 in die Aussparung 20 verschwenkt werden kann. In Figur 4 ist zusätzlich dargestellt, dass der Bolzen vorteilhafterweise durch ein Führungsorgan in Form einer Führungsplatte 25 geführt ist. Hierzu umfasst die Führungsplatte 25 z.B. eine schlitzartige Aussparung 26, in welcher der Bolzen entlang der durch den Bedienhebel 5 vorgegebenen Schwenkbewegung geführt ist. Die Aussparung 26 besitzt vorteilhafterweise einen Anschlagsfläche 27, an welche der Bolzen im maximal geschwenkten Zustand anstößt. Hierdurch ist ein Verkanten bzw. Verklemmen der Vorrichtung 1 bzw. des Bedienhebels 5 verhindert.

Ist der Bolzen in die Aussparung 20 verschwenkt (Figur 6), so kann das zweite Verschiebeteil 18 entsprechend der Größe der Aussparung 20, insbesondere entsprechend der Länge der Aussparung 20 entlang der Längsstrebe 21, relativ zur Grundplatte 6 verschoben werden. Die Aussparung 20 umfasst hierfür z.B. zwei sich gegenüberliegende Anschläge, an welche der Bolzen anstößt, wenn das zweite Verschiebeteil 18 durch einen Nutzer verschoben wird. Hierdurch ist ein Verschiebebereich der Verschiebeeinheit 3 definiert. Gleichzeitig ist eine Drehung des Drehtellers 7 relativ zur Grundplatte 6 frei, wodurch die Verschiebeeinheit 3 und damit bspw. der angeordnete Fahrzeugsitz relativ zur Grundplatte 6 drehbar ist.

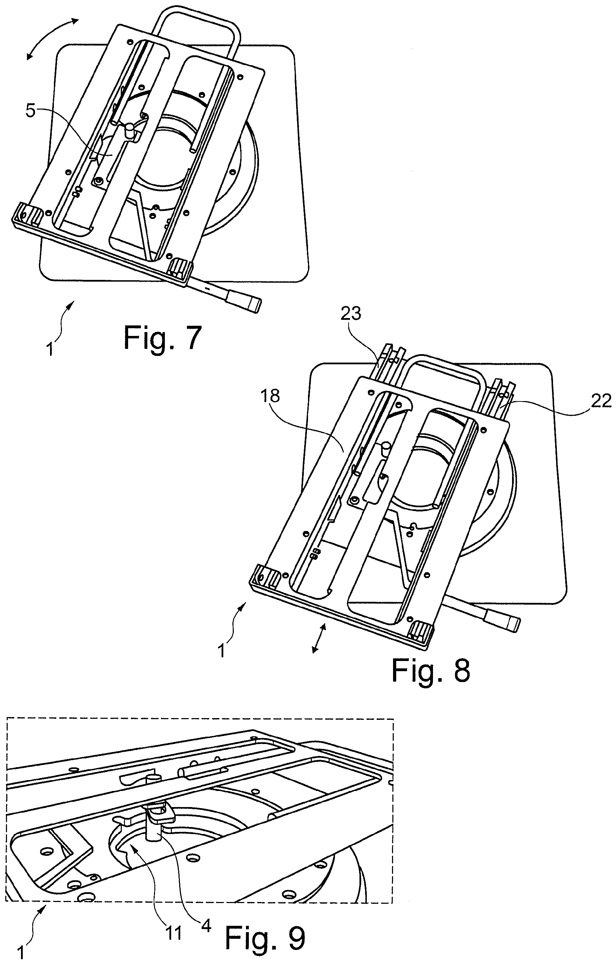

In Figur 7 dargestellt ist, dass die Verschiebeinheit 3 derart relativ zur Grundplatte 6 gedreht wurde, dass die Aussparung 20 und die Aussparung 11 benachbart zueinander vorhanden sind. Hierdurch ist der Bedienhebel 5 schwenkbar, sodass der Bolzen aus der Aussparung 20 der zweiten Verschiebeeinheit 18 in die Aussparung 11 der Grundplatte 6 verschwenkt werden kann.

In der Bewegungsposition des Bolzens in der Aussparung 11 ist die Verschiebeeinheit 3 relativ zur Grundplatte 6 wiederum frei verschieblich (Figuren 8, 9), wobei ein Drehbereich des Drehtellers 7 relativ zur Grundplatte 6 durch die Aussparung 11 beschränkt ist.

### Bezugszeichenliste

- 1: Vorrichtung
- 2: Dreheinheit
- 3: Verschiebeeinheit
- 4: Verriegelungselement
- 5: Bedienhebel
- 6: Grundplatte
- 7: Drehteller
- 8, 19, 28: Öffnung
- 9: Umfangsrand
- 10, 11: Aussparung
- 12: Aufnahme
- 13, 15: Hebelarm
- 14: Griff
- 16: Verbindungsstelle
- 17, 18: Verschiebeteil
- 20: Aussparung
- 21: Längsstrebe
- 22, 23: Schienenelement
- 24: Rand
- 25: Führungsplatte
- 26: Aussparung
- 27: Anschlagsfläche

## Patentansprüche

1. Vorrichtung (1) für ein Fahrzeugsitz mit einer Dreheinheit (2) und einer Verschiebeeinheit (3), wobei verschiedene Drehpositionen der Dreheinheit (2) einstellbar sind, wobei verschiedene Verschiebepositionen der Verschiebeeinheit (3) einstellbar sind, wobei die Vorrichtung (1) einen Sperrmechanismus aufweist, sodass eine Einstellbarkeit eines Drehbereichs der Dreheinheit (2) abhängig von einer Verschiebeposition der Verschiebeeinheit (3) ist,
**dadurch gekennzeichnet, dass**
der Sperrmechanismus ein Verriegelungselement (4) aufweist, wobei das Verriegelungselement (4) senkrecht zu einer Drehachse D der Dreheinheit (2) verschiebbar und/oder schwenkbar ist.

2. Vorrichtung (1) für ein Fahrzeugsitz nach dem Anspruch 1, **dadurch gekennzeichnet, dass** durch den Sperrmechanismus eine Einstellbarkeit eines Verschiebebereichs der Verschiebeeinheit (3) abhängig von einer Drehposition der Dreheinheit (2) ist.

3. Vorrichtung (1) für einen Fahrzeugsitz nach einem der vorangegangenen Ansprüche, **dadurch gekennzeichnet, dass** Rastmittel (10, 11) an der Dreheinheit (2) vorhanden sind, wobei die Rastmittel (10, 11) in einer Weise vorhanden sind, dass das Verriegelungselement (4) in die Rastmittel (10, 11) eingreifen kann, wobei bei einem Eingriff des Verriegelungselements (4) in die Rastmittel (10, 11) ein Drehbereich der Dreheinheit (2) begrenzt ist.

4. Vorrichtung (1) für einen Fahrzeugsitz nach einem der vorangegangenen Ansprüche, **dadurch gekennzeichnet, dass** Haltemittel (20) an der Verschiebeeinheit (3) vorhanden sind, wobei die Haltemittel (20) in einer Weise vorhanden sind, dass das Verriegelungselement (4) in die Haltemittel (20) eingreifen kann, wobei bei einem Eingriff des Verriegelungselements (4) in die Haltemittel (20) ein Verschiebebereich der Verschiebeeinheit (3) begrenzt ist.

5. Vorrichtung (1) für einen Fahrzeugsitz nach einem der vorangegangenen Ansprüche 3 oder 4, **dadurch gekennzeichnet, dass** das Verriegelungselement (4) derart vorhanden ist, dass das Verriegelungselement (4) entweder mit den Rastmittel (10, 11) und/oder mit den Haltemittel (20) in Eingriff steht.

6. Vorrichtung (1) für einen Fahrzeugsitz nach einem der vorangegangenen Ansprüche, **dadurch gekennzeichnet, dass** der Sperrmechanismus ein Bedienelement (5) aufweist, welches mit dem Verriegelungselement (4) derart verbunden ist, dass durch eine Bewegung des Bedienelements (5) eine Position des Verriegelungselements (4) veränderbar ist.

7. Vorrichtung (1) für einen Fahrzeugsitz nach einem der vorangegangenen Ansprüche, **dadurch gekennzeichnet, dass** im angeordneten Zustand der Vorrichtung (1) am Fahrzeug die Rastmittel (10, 11) relativ zum Fahrzeug positionsfest an der Dreheinheit (2) vorhanden sind.

8. Vorrichtung (1) für einen Fahrzeugsitz nach einem der vorangegangenen Ansprüche, **dadurch gekennzeichnet, dass** die Haltemittel (20) relativ zur Dreheinheit (2) verschiebbar an der Verschiebeeinheit (3) vorhanden sind.

9. Vorrichtung (1) für einen Fahrzeugsitz nach einem der vorangegangenen Ansprüche, **dadurch gekennzeichnet, dass** die Vorrichtung (1) ein Führungsorgan (25, 26) umfasst, welches dazu ausgestaltet ist, das Verriegelungselement (4) zu führen.

10. Fahrzeugsitz mit einer Vorrichtung (1) nach einem der vorangegangenen Ansprüche.

11. Fahrzeug mit einem Fahrzeugsitz oder einer Vorrichtung (1) nach einem der vorangegangenen Ansprüche.

## Claims

1. Device (1) for a vehicle seat with a rotating unit (2) and a sliding unit (3), wherein the rotating unit (2) can be adjusted into various rotational positions, wherein the sliding unit (3) can be adjusted into various sliding positions, wherein the device (1) has a locking mechanism, so that the adjustability of a rotational range of the rotating unit (2) is dependent on a sliding position of the sliding unit (3), **characterised in that** the locking mechanism has a locking element (4), wherein the locking element (4) is displaceable and/or pivotable perpendicular to a rotational axis D of the rotating unit (2).

2. Device (1) for a vehicle seat according to claim 1, **characterised in that** by means of the locking mechanism the adjustment of a sliding area of the sliding unit (3) is dependent on a rotational position of the rotating unit (2).

3. Device (1) for a vehicle seat according to any of the preceding claims, **characterised in that** catching means (10, 11) are provided on the rotating unit (2), wherein the catching means (10, 11) are provided such that the locking element (4) can engage with the catching means (10, 11), wherein with the engagement of the locking element (4) with the catching means (10, 11) the rotational range of the rotating unit (2) is limited.

4. Device (1) for a vehicle seat according to any of the preceding claims, **characterised in that** retaining means (20) are provided on the sliding unit (3), wherein the retaining means (20) are provided such that the locking element (4) can engage in the retaining means (20), wherein the sliding range of the sliding unit (3) is limited with the engagement of the locking element (4) in the retaining means (20).

5. Device (1) for a vehicle seat according to any of the preceding claims 3 or 4, **characterised in that** the locking element (4) is provided such that the locking element (4) is either in engaged with the catching means (10, 11) and/or with the retaining means (20).

6. Device (1) for a vehicle seat according to any of the preceding claims, **characterised in that** the locking mechanism has an operating element (5) which is connected to the locking element (4) such that by moving the operating element (5) a position of the locking element (4) can be adjusted.

7. Device (1) for a vehicle seat according to any of the preceding claims, **characterised in that** when the device (1) is arranged on the vehicle the catching means (10, 11) are fixed in position relative to the vehicle on the rotating unit (2).

8. Device (1) for a vehicle seat according to any of the preceding claims, **characterised in that** the retaining means (20) are provided to be displaceable on the sliding unit (3) relative to the rotating unit (2).

9. Device (1) for a vehicle seat according to any of the preceding claims, **characterised in that** the device (1) comprises a guiding element (25, 26), which is configured to guide the locking element (4).

10. Vehicle seat with a device (1) according to any of the preceding claims.

11. Vehicle with a vehicle seat or a device (1) according to any of the preceding claims.

## Revendications

1. Dispositif (1) pour un siège de véhicule comprenant une unité rotative (2) et une unité de déplacement (3), différentes positions de rotation de l'unité rotative (2) étant réglables, différentes positions de déplacement de l'unité de déplacement (3) étant réglables, le dispositif (1) comprenant un mécanisme de blocage, de sorte qu'un réglage d'une plage de rotation de l'unité rotative (2) dépend d'une position de déplacement de l'unité rotative (3), **caractérisé en ce que** le mécanisme de blocage est muni d'un élément de verrouillage (4), l'élément de verrouillage (4) pouvant être déplacé et/ou pivoté perpendiculairement à un axe de rotation D de l'unité rotative (2).

2. Dispositif (1) pour un siège de véhicule selon la revendication 1, **caractérisé en ce que,** au moyen du mécanisme de blocage, un réglage d'une plage de déplacement de l'unité de déplacement (3) dépend d'une position de rotation de l'unité de rotation (2).

3. Dispositif (1) pour un siège de véhicule selon l'une des revendications précédentes, **caractérisé en ce que** des moyens d'encliquetage (10, 11) sont présents sur l'unité rotative (2), les moyens d'encliquetage (10, 11) étant présents de telle sorte que l'élément de verrouillage (4) peut se mettre en prise dans les moyens d'encliquetage (10, 11), une plage de rotation de l'unité rotative (2) étant limitée lorsque l'élément de verrouillage (4) est en prise dans les moyens d'encliquetage (10, 11).

4. Dispositif (1) pour un siège de véhicule selon l'une des revendications précédentes, **caractérisé en ce que** des moyens de retenue (20) sont prévus sur l'unité de déplacement (3), les moyens de retenue (20) étant prévus de telle sorte que l'élément de verrouillage (4) peut venir en prise dans les moyens de retenue (20), une plage de déplacement de l'unité de déplacement (3) étant limitée lorsque l'élément de verrouillage (4) vient en prise dans les moyens de retenue (20).

5. Dispositif (1) pour un siège de véhicule selon l'une des revendications précédentes 3 ou 4, **caractérisé en ce que** l'élément de verrouillage (4) est présent de telle sorte que l'élément de verrouillage (4) peut venir en prise soit avec les moyens d'encliquetage (10, 11) et/soit avec les moyens de retenue (20).

6. Dispositif (1) pour un siège de véhicule selon l'une des revendications précédentes, **caractérisé en ce que** le mécanisme de blocage comprend un élément de commande (5) qui est relié à l'élément de verrouillage (4) de telle sorte qu'une position de l'élément de verrouillage (4) peut être modifiée par un mouvement de l'élément de commande (5).

7. Dispositif (1) pour un siège de véhicule selon l'une des revendications précédentes, **caractérisé en ce que,** à l'état monté du dispositif (1) sur le véhicule, les moyens d'encliquetage (10, 11) sont présents sur l'unité rotative (2) dans une position fixe par rapport au véhicule.

8. Dispositif (1) pour un siège de véhicule selon l'une des revendications précédentes, **caractérisé en ce que** les moyens de retenue (20) sont prévus sur l'unité de déplacement (3) de manière à pouvoir être déplacés par rapport à l'unité rotative (2).

9. Dispositif (1) pour un siège de véhicule selon l'une des revendications précédentes, **caractérisé en ce que** le dispositif (1) comprend un élément de guidage (25, 26) conçu pour guider l'élément de verrouillage (4).

10. Siège de véhicule avec un dispositif (1) selon l'une des revendications précédentes.

11. Véhicule avec un siège de véhicule ou un dispositif (1) selon l'une des revendications précédentes.
